Europäisches Patentamt

European Patent Office

Office européen des brevets

(11) Veröffentlichungsnummer : **0 123 780**
**B1**

# (12) EUROPÄISCHE PATENTSCHRIFT

(45) Veröffentlichungstag der Patentschrift :
27.05.87

(21) Anmeldenummer : 84100333.8

(22) Anmeldetag : 13.01.84

(51) Int. Cl.⁴ : **H 04 N   5/782, G 11 B 21/10**

(54) **Verfahren zur dynamischen Spureinstellung bei Videorecordern.**

(30) Priorität : 23.04.83 DE 3314743

(43) Veröffentlichungstag der Anmeldung :
07.11.84 Patentblatt 84/45

(45) Bekanntmachung des Hinweises auf die Patenterteilung : 27.05.87 Patentblatt 87/22

(84) Benannte Vertragsstaaten :
AT BE CH DE FR GB IT LI

(56) Entgegenhaltungen :
CH-A-   619 314
DE-A- 2 903 637
DE-A- 3 304 994

(73) Patentinhaber : GRUNDIG E.M.V. Elektro-Mechanische Versuchsanstalt Max Grundig holländ. Stiftung & Co. KG.
Kurgartenstrasse 37
D-8510 Fürth (DE)

(72) Erfinder : **Mangold, Hans**
Bussardstrasse 17
D-8510 Fuerth/Bay. (DE)
Erfinder : Schülein, Reinhard
Humboldtstrasse 6
D-8502 Zirndorf (DE)

### Beschreibung

Die vorliegende Erfindung betrifft ein Verfahren mit den im Oberbegriff des Anspruchs 1 angegebenen Merkmalen.

Mittels eines solchen Verfahrens können bei der magnetischen Videoaufzeichnung die ohne Zwischenraum aneinandergrenzenden, winkelentkoppelten Schrägspuren auf konstanten Abstand gebracht werden.

Die Anwendung des Verfahrens setzt voraus, daß die aufzeichnenden bzw. wiedergebenden rotierenden Video-Magnetköpfe senkrecht zu ihrer Abtastrichtung gesteuert bewegbar sind. Die gesteuerte Bewegbarkeit, wie sie z. B. beim System « Video 2000 » angewendet wird, dient primär der Spurfindung bei der Wiedergabe. Hierzu werden zusätzlich zum Luminanz- und Chrominanzsignal beispielsweise vier Hilfsfrequenzen aufgezeichnet, die unterhalb des Chrominanzsignals und Luminanzsignals liegen und die bei der Wiedergabe in einer Servo-Schaltung derart verarbeitet werden, daß der Wiedergabekopf immer so eingestellt wird, daß er auf der gewünschten Magnetspur läuft. Einzelheiten über dieses Verfahren sind beispielsweise aus « Grundig Technische Informationen », Heft 3/1-980, Seite 111 ff. und « Grundig Technische Informationen », Heft 3/1981, Seite 105 ff. zu entnehmen.

Die Möglichkeit der Steuerung der Magnetköpfe senkrecht zur Spurrichtung wird außer zur Spurfindung bei der Wiedergabe aber auch bei der Aufnahme dazu benutzt, um die aufeinanderfolgenden Spuren äquidistant zu schreiben. Hierzu wird ein Schwingungszug, auch Burst genannt, am jeweiligen Spuranfang mit einer weiteren Hilfsfrequenz aufgezeichnet. Unmittelbar nach der Aufzeichnung des Burstsignals, dessen Dauer nach dem Stand der Technik dem von Spur zu Spur entstehenden Spurversatz entspricht, wird der rotierende Magnetkopf auf Wiedergabe umgeschaltet und tastet das Burstsignal der vorhergehenden Spur ab. Die Amplitude des dabei gewonnenen Signals ist ein Maß für den Spurabstand und kann zur Einstellung des rotierenden Magnetkopfes am Spuranfang benutzt werden, derart, daß die Spurabstände konstant sind.

Die Bezugsgröße bei diesem Regelvorgang wird beim Stand der Technik dadurch gewonnen, daß einer der beiden rotierenden Video-Magnetköpfe auf dem Kopfrad hinsichtlich seiner Einstellung senkrecht zur Abtasteinrichtung eine feste Vorgabe erhält und nur der zweite Kopf so geregelt wird, daß äquidistante Spuren entstehen. Es ist prinzipiell aber auch möglich, jeweils bei Beginn einer Aufzeichnung die erste Spur mit fest eingestelltem rotierenden Video-Magnetkopf zu schreiben und anschließend beide Video-Magnetköpfe fortlaufend auf konstanten Spurabstand einzuregeln.

Für die exakte Spureinstellung darf dabei das Burstsignal nicht zu kurz sein, da mit der nachfolgenden Auswerteschaltung und auch mit der Umschaltung Aufnahme/Wiedergabe Einschwingvorgänge mit bestimmter Zeitdauer verbunden sind.

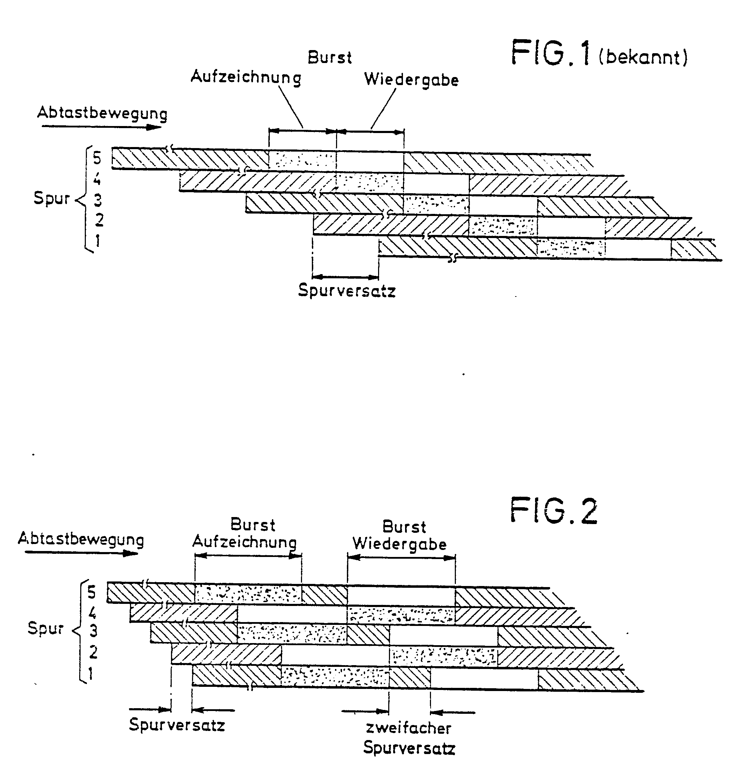

Wird die Aufzeichnung des Burstsignals nach dem Stand der Technik entsprechend der Dauer des Spurversatzes gewählt, dann liegen die Aufzeichnungsabschnitte in benachbarten Spuren geometrisch treppenförmig zueinander wie aus Figur 1 ersichtlich. Der rotierende Magnetkopf kann dann sofort nach der Aufzeichnungsperiode für den Burst auf Wiedergabe umgeschaltet und nach Maßgabe des aus der vorhergehenden Spur abgetasteten Burstsignals auf exakten Spurabstand eingestellt werden.

Bei geringer Spurbreite bzw. Bandgeschwindigkeit und entsprechend geringer Spurneigung kann der Spurversatz auf sehr kleine Werte absinken. Entsprechend den oben geschilderten Zusammenhängen wird dann nach dem Stand der Technik die Dauer des Burstsignals ebenfalls auf einen geringen Wert reduziert. Es besteht dann die Gefahr, daß dieses zeitlich verkürzte Burstsignal mit Rücksicht auf die mit der Kopfregelung verbundenen Einschwing- und Umschaltvorgänge für eine störsichere Regelung nicht mehr ausreicht.

Man könnte daran denken, das Burstsignal zeitlich über den Spurversatz hinaus zu verlängern, um wieder eine sichere Auswertung zu erreichen. Dann aber wandert die geometrische und zeitliche Position des Burstsignals von Spur zu Spur immer weiter auf der Aufzeichnungsspur voran und würde schließlich den Videosignal-Austastbereich verlassen bzw. in den Bildsignalbereich gelangen. Dies ist zur Vermeidung von Störungen unzulässig. Außerdem läßt sich bei zunehmender Entfernung der Burstaufzeichnung vom Spuranfang das gewünschte Ziel der Spureinstellung im Sinne eines konstanten Spurabstandes am Spuranfang nicht mehr befriedigend erreichen.

Aus der DE-OS-29 03 637 ist ein Verfahren zur Regelung der Lage eines Schreib/Lesekopfes bekannt (siehe beispielsweise Figur 4). Bei diesem Verfahren sind aufeinanderfolgende Spuren stets über einen konstanten Abstand P in bezug aufeinander verschoben. Weiterhin ist für die Länge der Unterdrückungsintervalle IS, während der bei der Aufzeichnung die Amplitude des Spursignals gemessen wird, der Wert 2 P gewählt. Durch die Positionierung dieser Unterdrückungsintervalle in den aufeinanderfolgenden Spuren wird erreicht, daß jedes Unterdrückungsintervall an einen Teil der vorhergehenden Spur grenzt, in dem ein Spursuchsignal aufgezeichnet ist.

Aufgabe der Erfindung ist es, bei der magnetischen Videoaufzeichnung in Schrägspuren auch bei geringem Versatz von Spur zu Spur ein Burstsignal für die Einstellung des Spurabstandes aufzuzeichnen und wiederzugeben, das in seiner zeitlichen Ausdehnung so gewählt werden kann, daß eine sichere Auswertung mit Hilfe der Regeleinrichtung für die Verstellung des Magnetkopfes senkrecht zur Abtastrichtung im Sinne der Erreichung äquidistanter Spuren möglich ist.

Die erfindungsgemäße Lösung dieser Aufgabe ist aus Figur 2 ersichtlich. Wird nämlich die zeitliche Folge der Aufzeichnung und Wiedergabe des Burstsignals von Spur zu Spur alternierend gewählt, dann kann das Burstsignal zeitlich ausgedehnt werden, ohne daß die unerwünschte Erscheinung der Wanderung innerhalb der Spur in Abtastrichtung auftritt. Im dargestellten Beispiel nach Figur 2 ist in der ersten Spur die geometrische und zeitliche Länge der Burstaufzeichnung beliebig gewählt. In der folgenden Spur wird nun die Burstaufzeichnung bezogen auf den Spuranfang um die Burstlänge zuzüglich des Spurversatzes verschoben und der Lesevorgang vor den Schreibvorgang gelegt. Damit wird der zeitlich verlängerte Burst vollständig ausgewertet und ein neuer Burst mit der gleichen Länge aufgezeichnet. In der dritten Spur schließlich setzt die Burstaufzeichnung bezogen auf den Spuranfang wieder so ein wie in der ersten Spur, während der Lesevorgang gegenüber der Aufzeichnung um die Burstlänge zuzüglich des doppelten Spurversatzes verschoben ist. Durch Vertauschung der Reihenfolge von Schreiben und Lesen sowie durch Einfügen einer Lücke zwischen Schreiben und Lesen in jeder zweiten Spur um die Dauer des doppelten Spurversatzes wird also sichergestellt, daß bei verlängerter Burstdauer das Burstsignal in voller Länge gelesen werden kann und trotzdem der Schreib- und Lesevorgang am Spuranfang verbleibt, wie es für die wirkungsvolle und störsichere Regelung des Spurabstandes nötig ist. Außerdem wird durch die erfindungsgemäße Aufzeichnungs-Wiedergabe-Geometrie für das Steuersignal (Burst) erreicht, daß jedem der beiden Magnetköpfe ein konstanter zeitlicher Ablauf für Aufzeichnung und Wiedergabe zugeordnet ist. Mit anderen Worten, der erste Videokopf (ungeradzahlige Spuren) zeichnet in festem Abstand oder zeitlicher Dauer vom Spuranfang auf, dann folgt eine Lücke entsprechend dem doppelten Spurversatz, danach der Wiedergabebereich für das Steuersignal (Burst). Der zweite Videokopf (geradzahlige Spuren) gibt in festem Abstand oder zeitlicher Dauer vom Spuranfang wieder und zeichnet ohne Lücke anschließend auf.

Zum besseren Verständnis des Verfahrens sei noch angemerkt, daß die Wiedergabe des Steuersignals (Burst) aus der vorhergehenden Spur trotz Winkelentkopplung auch dann noch möglich ist, wenn der Video-Magnetkopf die vorhergehende Spur nicht mehr unmittelbar trifft. Dies erklärt sich daraus, daß die Frequenz des Steuersignals bezogen auf das Videosignal verhältnismäßig niedrig gewählt wird, so daß die Winkelentkopplung unwirksam wird und das Streufeld über die Spurbreite hinaus wirkt.

**Patentansprüche**

1. Verfahren zur dynamischen äquidistanten Spureinstellung bei der magnetischen Schrägspur-Videoaufzeichnung mit Hilfe von rotierenden Video-Magnetköpfen, die senkrecht zur Bewegungsrichtung durch ein Servosystem verstellbar sind, wobei die Ansteuerung des Servosystems durch ein jeweils am Spuranfang eingetastetes Steuersignal (Burst) bestimmter Frequenz erfolgt und wobei der Wiedergabebereich einer neuen Spur dem Aufzeichnungsbereich der vorangegangenen Spur unmittelbar benachbart ist, dadurch gekennzeichnet, daß die Reihenfolge der Aufzeichnung und Wiedergabe für das in beliebiger Länge eingetastete Steuersignal (Burst) bezogen auf die Abtastbewegung des Video-Magnetkopfes von Spur zu Spur alternierend und bezogen auf den Spuranfang von Spur zu Spur zeitlich und geometrisch versetzt erfolgt.

2. Verfahren nach Anspruch 1, dadurch gekennzeichnet, daß in jeder zweiten Spur zwischen dem Aufzeichnungs- und Wiedergabebereich des Steuersignals (Burst) eine Lücke mit der Länge des doppelten Spurversatzes eingefügt ist.

3. Verfahren nach Anspruch 1, dadurch gekennzeichnet, daß in jeder zweiten Spur die Summe der zeitlichen und geometrischen Länge des Aufzeichnungs- und Wiedergabebereichs für das Steuersignal (Burst) um den doppelten Spurversatz vergrößert wird.

**Claims**

1. Method for dynamic equidistant track adjustment in magnetic helical-scan video recording with the aid of rotating magnetic video heads which are adjustable by a servosystem perpendicularly to the direction of movement, the servosystem being controlled by a control signal (burst) of a particular frequency keyed in in each case at the beginning of the track and the area of reproduction of a new track being located immediately adjacent to the area of recording of the preceding track, characterized in that the order of recording and reproduction for the control signal (burst) keyed in arbitrary length, relative to the scanning movement of the magnetic video head, takes place alternatingly from track to track and, relative to the beginning of the track, offset in time and geometry from track to track.

2. Method according to Claim 1, characterized in that a gap having the length of twice the track offset is inserted in each second track between the recording and reproduction area of the control signal (burst).

3. Method according to Claim 1, characterized in that the sum of the length in time and geometry of the recording and reproduction area for the control signal (burst) is increased by twice the track offset in each second track.

**Revendications**

1. Procédé de réglage dynamique équidistant des pistes lors de l'enregistrement magnétique vidéo sur des pistes obliques à l'aide de têtes magnétiques vidéo rotatives, qui peuvent être décalées perpendiculairement à la direction de déplacement au moyen d'un système d'asservissement et selon lequel la commande du système d'asservissement est réalisée au moyen d'un signal de commande (rafale) appliqué à chaque début de piste et possédant une fréquence déterminée, et selon lequel la zone de reproduction d'une nouvelle piste est directement voisine de la zone d'enregistrement de la piste précédente, caractérisé par le fait que la succession de l'enregistrement et de la reproduction pour le signal de commande (rafale), appliqué avec une durée quelconque, s'effectue en alternance d'une piste à la suivante, par rapport au déplacement de balayage de la tête magnétique vidéo, et avec un décalage du point de vue temporel et du point de vue géométrique d'une piste à la suivante, par rapport au début de la piste.

2. Procédé selon la revendication 1, caractérisé en ce qu'un espace vide possédant une longueur double du décalage des pistes est inséré dans une piste sur deux entre la zone d'enregistrement et la zone de reproduction.

3. Procédé selon la revendication 1, caractérisé en ce que dans une piste sur deux, la somme des longueurs, considérées dans le temps et du point de vue géométrique, de la zone d'enregistrement et de la zone de reproduction pour le signal de commande (rafale) est accrue du double du décalage des pistes.

FIG.1 (bekannt)

Burst

Aufzeichnung    Wiedergabe

Abtastbewegung

Spur

Spurversatz

FIG.2

Burst
Aufzeichnung

Burst
Wiedergabe

Abtastbewegung

Spur

Spurversatz

zweifacher
Spurversatz